# EUROPEAN PATENT APPLICATION

(11) **EP 1 545 125 A1**
(43) Date of publication of application: **22.06.2005**
(21) Application number: 03798374.9
(22) Date of filing: 11.08.2003
(51) Int. Cl.: H04N 5/44, H04N 5/445, H04N 5/93

(54) **DATA OUTPUT DEVICE FOR DETERMINING CANDIDATE OF ADEQUATE DATA**

(30) Priority: 26.09.2002 JP 2002280932
(71) Applicant: Sharp Kabushiki Kaisha, Osaka-shi, Osaka 545-8522 (JP)
(72) Inventor: SUDOH, Tatsuo, Tenri-shi, Nara 632-0004 (JP)
(74) Representative: Brown, Kenneth Richard
(86) International application number: PCT/JP2003/010233
(87) International publication number: WO 2004/030352

(57) **Abstract**

A media data switch request receiving unit (101) of a media data reproducing apparatus (100) receives a media data switch request operation from a user. A preference score counting unit (103) counts the preference score voting operations received by a preference score vote receiving unit (102), and the result is stored in a preference score result storing unit (107). A preference score limit setting unit (106) sets an upper or lower limit of the preference score. A switch destination media data determining unit (104) determines media data as a switch destination from media data that is being reproduced, based on the result of preference score counting stored in the preference score result storing unit (107). The determined switch destination media data is output to output unit (105), using reception of a switch request by the media data switch request receiving unit (101) as a trigger.

## Description

### Technical Field

The present invention relates to a data output apparatus, a control apparatus, a data output method, and a data output program product. More specifically, the present invention relates to a data output apparatus, a control apparatus, a data output method, and a data output program product that can determine and present to the user appropriate data candidates.

### Background Art

In a conventional television receiver (hereinafter referred to as a TV set), unique numbers are allotted to respective channels, and when a user designates a unique number by operating, for example, a remote controller (hereinafter referred to as a remote), the channel can be changed to a desired one. The same applies to a radio receiver, and by presetting frequencies of broadcasting stations, it is possible to directly designate and receive radio transmission from an arbitrary broadcasting station by, for example, a button operation.

When the number of channels is several tens to hundreds as in the case of BS/CS broadcasting, it is impractical to provide buttons same in number as the channels on a remote. Therefore, it is often the case that the channel for reception is designated by a number of button operations. By way of example, if the channel number is 60, buttons "6" and "0" are pressed successively.

The number of channels that a user can remember is limited, and repeated button operations are troublesome. Therefore, in most cases, a "next" button or "back" button to change to the adjacent channel is used.

Assume that images picked-up by a digital camera are to be displayed one after another successively, or that tunes to be played by a portable audio player are to be changed successively. Such equipment is rarely provided with number buttons (0 to 9) seen on a TV remote, and it is typical to use buttons for switching to a "next medium" or a "previous medium."

Such a process of successively reproducing or displaying a number of data, evaluating each data and narrowing down to preferable data becomes increasingly troublesome as the number of data increases.

Therefore, it is sometimes effective that data that would be preferred by the user are extracted by the equipment side and presented to the user for selection.

As an apparatus employing such a method, a program selecting apparatus allowing efficient selection of a program preferred by the user among a number of programs has been known, as disclosed, for example, in Japanese Patent Laying-Open No. 10-257405. In the program selecting apparatus, programs that are considered to be user's must-see-programs are actively recommended, based on user's desired viewing time, preferred category, names of places and characters appearing in frequently viewed programs and the like, and the user selects one of the recommended programs.

Preference of a user, however, changes with time, and therefore, the method of presenting recommended programs based on information set in the past such as disclosed in Japanese Patent Laying-Open No. 10-257405 cannot reflect newer preferences of the user.

If the preference of the user covers many fields or the number of recommended programs in a preferred field is very large, application of the method such as disclosed in Japanese Patent Laying-Open No. 10-257405 that narrows down candidates to a small number may be difficult.

Further, data such as images picked up by a digital camera that do not have any attribute related to user's preference at all are to be handled, it is impossible to narrow down the candidates on the equipment side.

The present invention was made to solve the above described problem, and its object is to provide a data output apparatus, a control apparatus, a data output method, and a data output program product that can efficiently narrow down appropriate candidates from a large number of data candidates.

### Disclosure of the Invention

In order to solve the above described problems, the present invention provides a data output apparatus, a control apparatus, a data output method, and a data output program product such as described in the following.
(1) A data output apparatus, including: a preference score vote receiving unit receiving a vote of preference score of output data representing a degree of preference; a preference score counting unit counting the vote of preference score received by the preference score vote receiving unit; an output unit switching data to be output from first data to second data and outputting; and switch destination data determining unit determining, when the data output by the output unit is to be switched from the first data to the second data, the second data based on a result of counting by the preference score counting unit.
(2) A control apparatus communicating with a data output apparatus for controlling the data output apparatus, including: a preference score vote receiving unit receiving a vote of preference score of output data representing a degree of preference; preference score counting means for counting the vote of preference score received by the preference score vote receiving unit; an output unit outputting to the data output apparatus a control signal for switching data to be output by the output apparatus from first data to second data; and a switch destination data determining unit for determining the second data, when the control signal for switching data to be output by the output apparatus from first data to second data is output from the output unit to the output apparatus, based on a result of counting by the preference score counting unit.
(3) A data output method, including: the preference score voting step of receiving a vote of preference score of output data representing degree of preference; the preference score counting step of counting the vote of preference score; the data switching step of switching the output data from first data to second data; and the switch destination data determining step of determining the second data, when the first data being output is switched to the second data in the data switching step, based on the result of counting of the preference score.
(4) A data output program product causing a computer to execute a data output method, the method including the preference score voting step of receiving a vote of preference score of output data representing degree of preference; the preference score counting step of counting the vote of preference score; the data switching step of switching the output data from first data to second data; and the switch destination data determining step of determining the second data, when the first data being output is switched to the second data in the data switching step, based on the result of counting of the preference score.

### Brief Description of the Drawings

Fig. 1 shows a specific example of a hardware configuration of a media data reproducing apparatus 100 in accordance with an embodiment of the present invention.
Fig. 2 is a functional block diagram representing a functional configuration realizing the function of switching media data to be reproduced, in media data reproducing apparatus 100 in accordance with an embodiment of the present invention.
Fig. 3 is a flow chart representing a flow of a switch destination media data determining process performed by media data reproducing apparatus 100 in accordance with an embodiment of the present invention.
Fig. 4 shows a specific example of a buttons-layout on a remote 30 controlling a TV set as media data reproducing apparatus 100 in accordance with the first embodiment.
Fig. 5 shows a specific example of a preference score table formed by a preference score counting unit 103 and stored in a preference score result storing unit 107 in accordance with the first embodiment.
Fig. 6 shows a specific example of a switch management table formed by a switch destination media data determining unit 104 in accordance with the first embodiment.
Fig.7 is a functional block diagram representing a functional configuration of remote 300 performing the switch destination determining process.
Fig. 8 is a functional block diagram representing a functional configuration realizing the function of switching media data to be reproduced, in media data reproducing apparatus in accordance with a first modification of the first embodiment.
Fig. 9 is a flow chart representing a flow of a switch destination media data determining process performed by media data reproducing apparatus 100 in accordance with the first modification of the first embodiment.
Fig. 10 shows a specific example of a switch management table formed by switch destination media data determining unit 104 in accordance with the first modification of the first embodiment.
Figs. 11 and 12 are functional block diagrams representing a functional configuration of remote 300 performing a part of or all of the switch destination media data determining process in accordance with the first modification of the first embodiment.
Fig. 13 is a functional block diagram representing a functional configuration realizing a function of successively switching media data to be reproduced, in media data reproducing apparatus 100 in accordance with a second modification of the first embodiment.
Fig. 14 is a flow chart representing a flow of a switch destination media data switching process performed by media data reproducing apparatus 100 in accordance with the second modification of the first embodiment.
Fig. 15 shows a specific example of an output time management table formed by a data output time determining unit 110 in accordance with the second modification of the first embodiment.
Fig. 16 is functional block diagram representing a functional configuration of remote 300 fully performing the switch destination media data determining process in accordance with the second modification of the first embodiment.
Fig. 17 shows a specific example of an operation system layout on a back surface of a digital camera 400 as media data reproducing apparatus 100 in accordance with a second embodiment.
Fig. 18 shows a specific example of a preference score table formed by a preference score counting unit 103 and stored in a preference score result storing unit 107 in accordance with the second embodiment.
Fig. 19 shows a specific example of a switch management table formed by a switch destination media data determining unit 104 in accordance with the second embodiment.
Fig. 20 shows a specific example of an output time management table formed by a data output time determining unit 110 in accordance with a modification of the second embodiment.

### Best Modes for Carrying Out the Invention

Embodiments of the present invention will be described in the following with reference to the figures. In the following description, the same portions and components are denoted by the same reference characters. These have the same names and functions. Therefore, detailed description thereof will not be repeated.

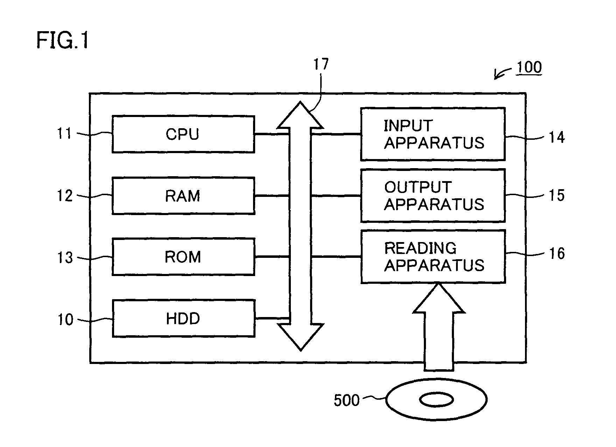

Fig. 1 shows a specific example of a hardware configuration of a media data reproducing apparatus 100 in accordance with an embodiment of the present invention.

Referring to Fig. 1, media data reproducing apparatus 100 in accordance with the present embodiment includes a CPU (Central Processing Unit) 11 controlling media data reproducing apparatus 100 as a whole, an HDD (Hard Disc Drive) 10, an RAM (Random Access Memory) 12 and an ROM (Read Only Memory) 13 as recording apparatuses, an input apparatus 14 receiving external inputs, an output apparatus 15 for outputting data externally, and a reading apparatus 16 for reading a recording medium 500, which are connected to a bus 17.

Input apparatus 14 may be an operation panel and/or an operation button to be operated by a user, or it may be an apparatus that receives an operational input or data input from an external apparatus. When a user input is received by input apparatus 14, an instruction is output from input apparatus 14 through bus 17 to CPU 11. Based on the input operation signal, CPU 11 reads and executes a program recorded on ROM 13 or on a recording medium 500 read by reading apparatus 16, and outputs control signals to various portions. At this time, RAM 12 serves as a work area therefor.

The hardware configuration of media data reproducing apparatus 100 shown in Fig. 1 is a general computer hardware configuration, and it is needless to say that the hardware configuration of the media data reproducing apparatus in accordance with the present invention is not limited to the one shown in Fig. 1.

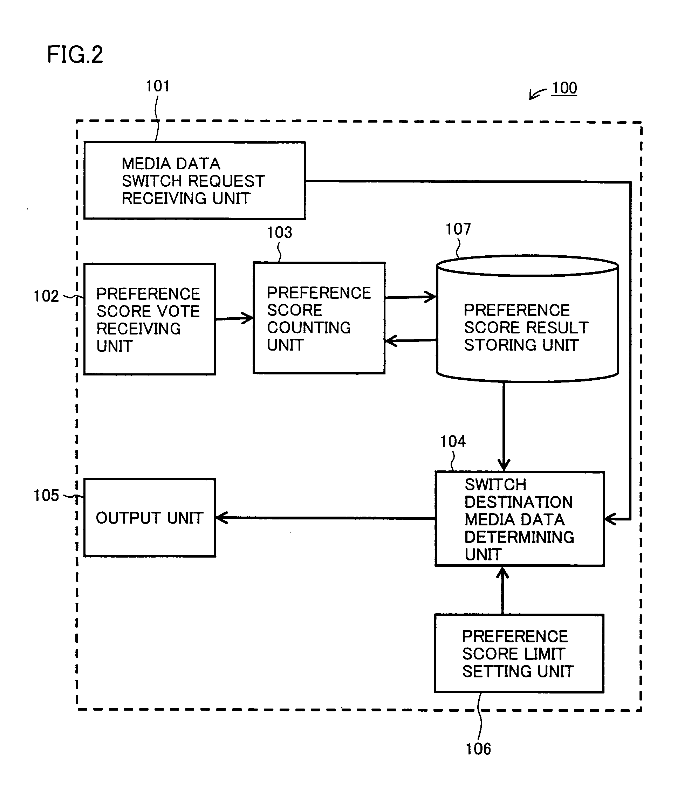

Fig. 2 is a functional block diagram representing a functional configuration realizing a function of switching media data to be reproduced, in media data reproducing apparatus 100 in accordance with the present embodiment. Various units shown in Fig. 2 represent functions exhibited when CPU 11 reads and executes a program stored in ROM 13 or the like.

Referring to Fig. 24, media data reproducing apparatus 100 includes a media data switch request receiving unit 101, a preference score vote receiving unit 102, a preference score counting unit 103, a switch destination media data determining unit 104, an output unit 105, a preference score limit setting unit 106, and a preference score result storing unit 107.

A user performs a media data switch request operation and a preference score voting operation, on media data reproducing apparatus 100. The media data switch request operation is received by data switch request receiving unit 101. The preference score voting operation is received by preference score vote receiving unit 102, and counted by preference score counting unit 103. The result of preference score counting by preference score counting unit 103 is stored in preference score result storing unit 107. Further, preference score limit setting unit 106 sets upper or lower limit of the preference score.

Switch destination media data determining unit 104 determines a switch destination media data, that is, the media data to be switched to next, utilizing the result of preference score counting stored in preference score result storing unit 107 and the set upper limit or lower limit of the preference score. Switch destination media data determining unit 104 outputs the determined switch destination media data to output unit 105, using reception of a switch request by media data switch request receiving unit 101 as a trigger.

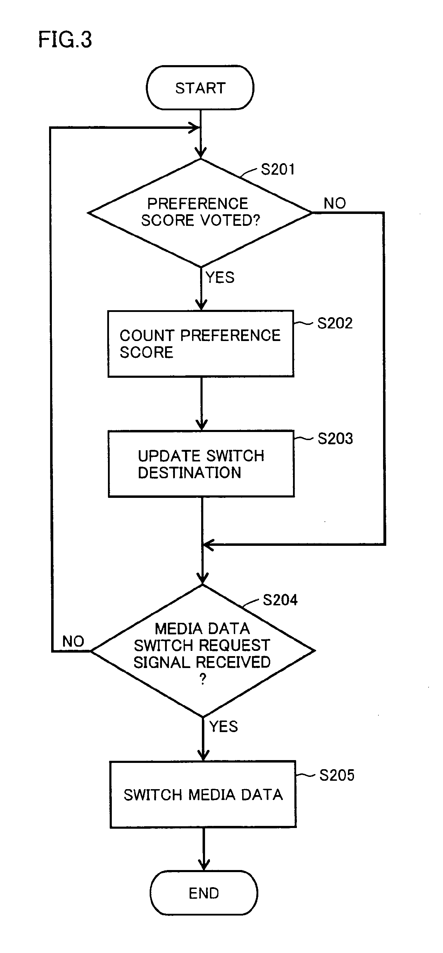

Fig. 3 is a flow chart representing a flow of the switch destination media data determining process performed by media data reproducing apparatus 100 in accordance with the present embodiment. The switch destination media data determining process shown by the flow chart of Fig. 3 is realized by CPU 11 of media data reproducing apparatus 100 reading a program stored in ROM 103 or the like and causing various units shown in Fig. 2 to function.

Referring to Fig. 3, first, preference vote receiving unit 102 receives a preference vote from a user (YES in S201), and passes the received preference vote information to preference score counting unit 103.

Next, preference score counting unit 103 counts the preference scores (S202). Based on the result of counting in step S202, the preference score result stored in preference score result storing unit 107 is updated.

Next, switch destination media data determining unit 104 determines a switch destination media data, that is, the media data to be switched to next, based on the result of preference score counting stored in preference score result storing unit 107 (S203).

When media data switch request receiving unit 101 receives a media data switch request from a user (YES in S204), switch destination media data determining unit 104 switches, using the reception as a trigger, the media data to be reproduced by output unit 105, based on the determined switch destination media data (S205).

Thus, the switch destination media data determining process by media data reproducing apparatus 100 ends, and at output unit 105 of media data reproducing apparatus 100, the media data is switched to one reflecting user's preference and reproduced.

In step S203, determination of switch destination media data may be executed every time preference score vote receiving unit 102 receives a vote from a user, or it may be executed when media data switch request receiving unit 101 receives a media data switch request from a user. In the former case, it is assumed that media data reproducing apparatus 100 further includes a switch destination storing unit (not shown) for storing the switch destination determined by switch destination media data determining unit 104 until media data is switched in step S205, for instance, in a prescribed area of RAM 12.

Here, reproduction of media data refers to one type of data output, in which media data in the form of data is re-configured and output. When the media data is document data, still image data or moving picture data, "reproduction" means to display the document, still image or moving picture. When the media data is music data, reproduction means output of the music.

### [First Embodiment]

As a first embodiment, an example will be described in which media data reproducing apparatus 100 is a television receiver (hereinafter referred to as a TV set). In the first embodiment, a remote controller (hereinafter simply referred to as remote) 300 as a control apparatus is used for controlling the TV set as media data reproducing apparatus 100.

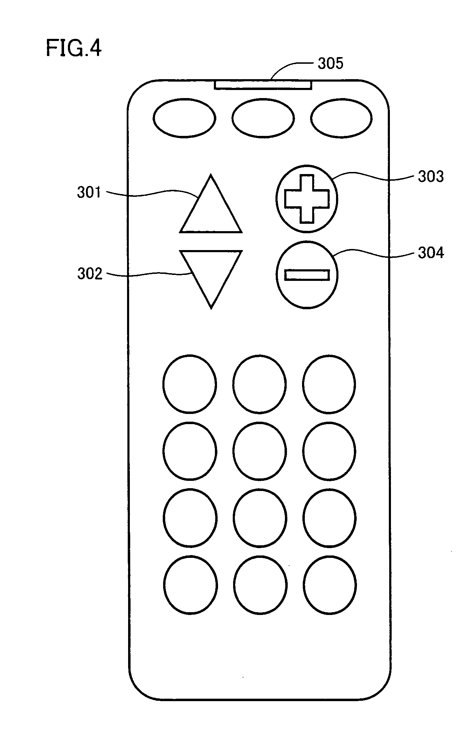

Fig. 4 shows a specific example of a buttons-layout of remote 300.

Referring to Fig. 4, remote 300 in accordance with the first embodiment includes a button 301 for displaying a previous channel, a button 302 for displaying a next channel, a button 303 for a positive vote to increase the preference score, and a button 304 for a negative vote to decrease the preference score. Remote 300 further includes a transmitting unit 305 for transmitting information input by the user through buttons 301 to 304 to the TV set as media data reproducing apparatus 100.

The TV set as media data reproducing apparatus 100 in accordance with the present embodiment further includes a receiving unit forming input apparatus 14 for receiving a control signal transmitted from remote 300, and at media data switch request receiving unit 101, receives the channel switch request operation by buttons 301 and 302 of remote 300. Further, at preference score vote receiving unit 102, it receives the preference score voting operation by buttons 303 and 304 of remote 300.

In the following, a zapping operation through channels by the user using these buttons 301 to 304 will be described.

It is assumed that there are 40 channels in all, to which channel numbers 1 to 40 are allotted.

In a stage where preference score voting is not at all performed, channels are switched such that every time button 302 is pressed, the channel is switched to a next channel in ascending order, and every time button 301 is pressed, the channel is switched to a next channel in descending order. When button 302 is pressed while channel 40, that is, the last channel is being displayed, the channel is switched to the first channel, channel 1, and when button 301 is pressed while channel 1 is being displayed, the channel is switched to channel 40.

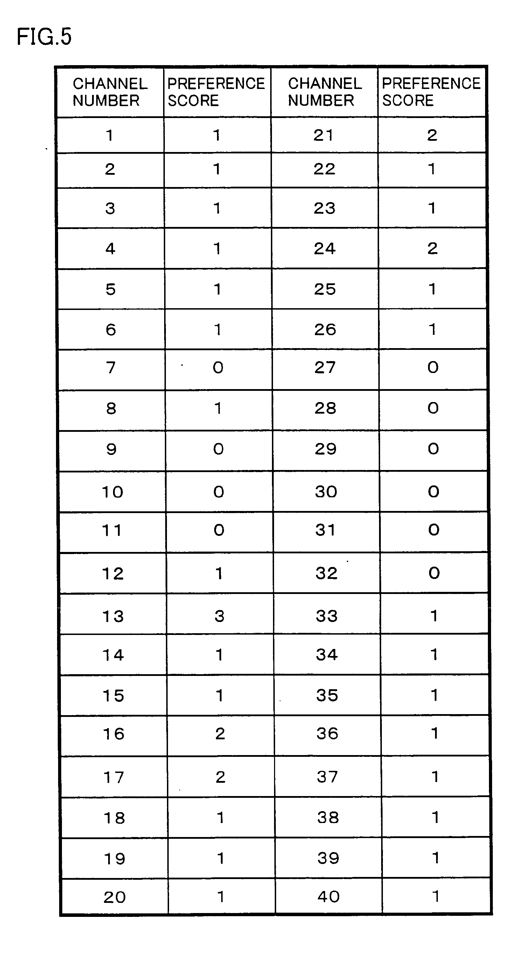

When a user's vote from remote 300 is received at preference score vote receiving unit 102, the TV set as media data reproducing apparatus 100 forms a preference score table such a shown in Fig. 5, at preference score counting unit 103, based on the result of voting. Then the preference score table stored in preference score result storing unit 107 is updated to enable management of user preference for each channel.

Fig. 5 shows a specific example of preference score table formed by preference score counting unit 103 and stored in preference score result storing unit 107. The preference score table shown in Fig. 5 shows channel numbers and corresponding user preference scores of respective channels.

The preference score table shown in Fig. 5 has preference scores of all the channels set to 1 in the initial state. When button 303 is pressed while the user is viewing a channel, the preference score of that channel is incremented by the number of pressing the button 303. On the contrary, when button 304 is pressed while the user is viewing a channel, the preference score of that channel is decremented by the number of pressing the button 304.

In the foregoing, an example has been described in which button 303 or 304 is pressed as a preference vote for only the channel that is being displayed, voting may be possible for other channels that are not being displayed. By way of example, when data of TV broadcast as media data include attribute such as attendant information including program category or performer information, simultaneous voting may be possible for other channels including the same attribute as that of the data presently broadcast on the presently displayed channel.

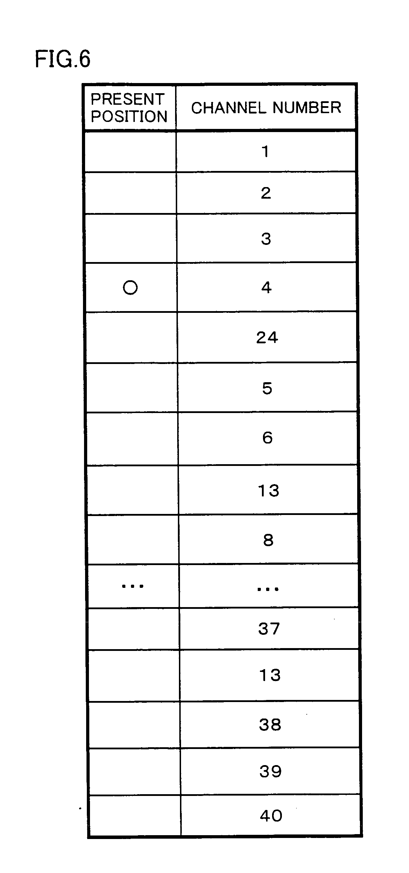

In the TV set as media data reproducing apparatus 100, based on the preference score table shown in Fig. 5, an arrangement representing the order of channel switching is re-arranged as shown in Fig. 6, at switch destination media data determining unit 104. Fig. 6 shows a specific example of a switch management table formed at switch destination media data determining unit 104. The switch management table shown in Fig. 6 is formed every time a user's vote from remote 300 is received at preference vote receiving unit 102 and the preference score table stored in preference score result storing unit 107 is updated. Alternatively, the table may be formed when a channel switch request operation by buttons 301 and 302 of remote 300 is received by media data switch request receiving unit 101.

Referring to Fig. 6, when the switch management table shown in Fig. 6 is to be formed, switch destination media data determining unit 104 enters a channel number repeatedly by the number corresponding to the preference score of that channel on the preference score table shown in Fig. 5. Specifically, a channel of which preference is set to 2 or more appears a plurality of times on the switch management table shown in Fig. 6. For example, in the preference score table of Fig. 5, channel 24 has the preference score of 2, and therefore, in the channel arrangement of switch management table of Fig. 6, channel 24 appears once at the original position between channels 23 and 25 and in addition, once interrupting the channel arrangement from channel 1 to 40. The interrupting position may be determined at random, or may be arranged uniformly. Specifically, in Fig. 6, interruption is between channels 4 and 5. A channel of which preference score is 0 or lower in the preference score table of Fig. 5 is not entered to the switch management table of Fig. 6.

Further referring to Fig. 6, a mark on the left of the channel arrangement represents a channel that is being displayed at present. Specifically, in the example of Fig. 6, channel 4 is displayed at present. In this state, when the user presses button 301, the channel is switched to channel 3, and when the user presses button 302, the channel is switched to channel 24.

The TV set as media data reproducing apparatus 100 of the first embodiment performs the above described operations. Therefore, when the user performs the preference score voting operation by remote 300 and repeats switching to a next or a previous channel, it follows that preferred channels are displayed with higher frequency while less preferred channels are displayed with lower frequency or eventually not displayed at all. Thus, the user can narrow down to one or more desired channels eventually, without intentionally remembering the channel numbers.

It is assumed that, under a prescribed condition, preference score counting unit 103 resets the preference score table updated through the above described series of operations and stored in preference score result storing unit 107. The prescribed condition may be that preference score of every channel is set to 1 when the power of the TV set is turned off, or when a program broadcast on a certain channel ends, the preference of the channel may be reset. Alternatively, a dedicated remote button may be provided and utilized only for an operation of resetting the preference score.

In the above described example, a channel having the preference score of 0 or lower is automatically excluded from the objects of switching. Preference score limit setting unit 106 may receive a setting of a lower limit of preference score, and when the lower limit of preference score is set to -1, the channel arrangement of Fig. 6 may be re-arranged from a list of channels having preference scores not lower than -1. This enables recovery of a channel that has been once excluded from the objects of switching to the switching order.

Further, the preference score table shown in Fig. 5 and the management table shown in Fig. 6 may be displayed on the TV screen, and channel switch or voting operation may be performed viewing the tables. In addition, information representing program contents may be displayed on the TV screen in correspondence with the channel number, together with the preference score table and the switch management table. By way of example, when the TV broadcast is digital broadcast, information related to a program (title, performer information and the like) transmitted as program information from a TV station may be displayed on the TV screen in correspondence with the channel number, for better convenience to the user.

Further, an image or sound as a mark, which indicates the value of preference score or how high (low) the preference score is for the presently displayed program, may be output.

Further, the TV set as media data reproducing apparatus 100 may manage a plurality of preference score tables such as shown in Fig. 5 and switch management tables such as shown in Fig. 6, and an arbitrary one of the plurality of preference score tables and arbitrary one of the plurality of switch management tables may be designated automatically or by a user operation, considering the user who watches and operates the TV set, time zone, or where the TV set is placed.

Further, the preference score table shown in Fig. 5 and switch management table shown in Fig. 6 may be obtained from an external apparatus by using a network or by using a recording medium such as a memory card.

In the above described example, a channel having high preference is inserted in the middle of a channel arrangement predetermined in the switch management table. The method, however, is not limited thereto. For example, the channel arrangement of the switch management table may be re-arranged such that channels are aligned in order, from the one having the highest preference score.

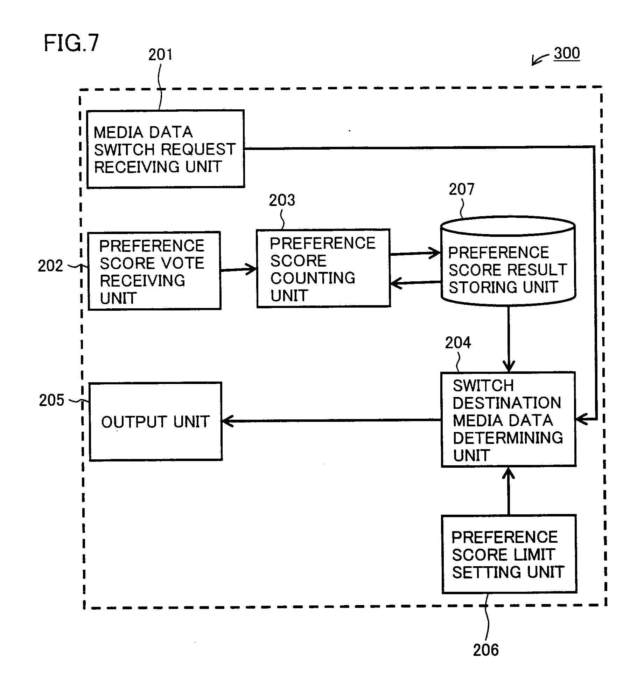

In the first embodiment, an example has been described in which the TV set as media data reproducing apparatus 100 receiving information input from remote 300 performs the process of determining the media data as the switch destination. The process may be fully executed by remote 300. Fig. 7 is a block diagram representing the functional configuration of remote 300 in that case. Referring to Fig. 7, remote 300 in this case also includes a media data switch request receiving unit 201, a preference score vote receiving unit 202, a preference score counting unit 203, a switch destination media data determining unit 204, an output unit 205, a preference score limit setting unit 206, and a preference score result storing unit 207. These units have the same functions as those of media data reproducing apparatus 100, and therefore, description thereof will not be repeated here. Remote 300 transmits, from output unit 205 having a communicating function to the TV set, a control signal for switching the channel to be displayed on the TV set to the channel switch destination determined by switch destination media data determining unit 204. The process here is also the same as that described above, and therefore, description thereof will not be repeated.

Assuming that remote 300 has such a functional configuration as shown in Fig. 7 and different users of the TV set as media data reproducing apparatus 100 have different remotes, it becomes possible to display one's preferred channel on any of a plurality of TV sets at home, by an operation using one same remote. Further, when a plurality of users operate one TV set by their own remotes, desired channels can be immediately called without any special operation on the TV set for changing the user.

### [First modification of the first embodiment]

As a first modification of the first embodiment, an example will be described in which the TV set as media data reproducing apparatus further includes means for obtaining new arrival information, and the obtained new arrival information is displayed on the TV screen, using a channel switch operation by the user as a trigger.

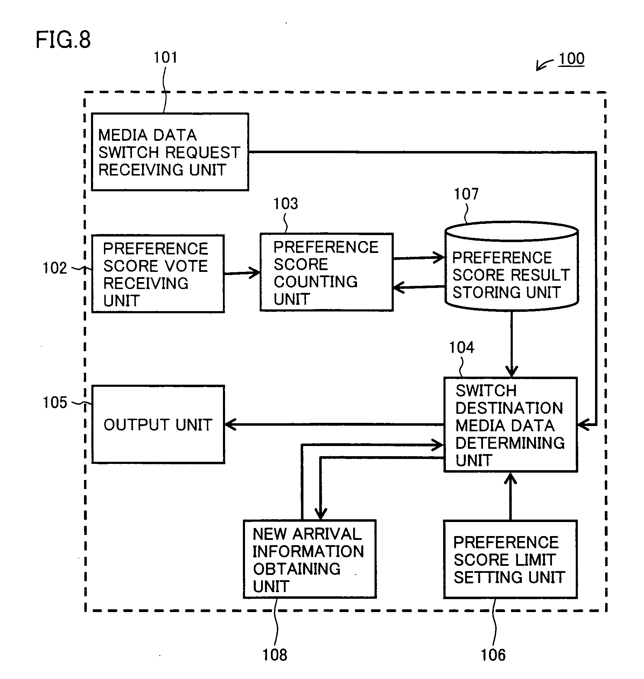

Fig. 8 is a functional block diagram representing a functional configuration realizing the function of switching the media data to be reproduced, in media data reproducing apparatus 100 of the first modification of the present embodiment. The first modification of the present embodiment is characterized in that the media data to be reproduced include new arrival information.

Referring to Fig. 8, media data reproducing apparatus 100 of the first modification includes, in addition to various components of media data reproducing apparatus 100 in accordance with the first embodiment shown in Fig. 2, a new arrival information obtaining unit 108.

Switch destination media data determining unit 104 adds the new arrival information obtained by new arrival information obtaining unit 108 to the predetermined media data as candidates of switch destination.

Other components of media data reproducing apparatus 100 have the same functions and roles as those of the first embodiment, and therefore, description thereof will not be repeated here.

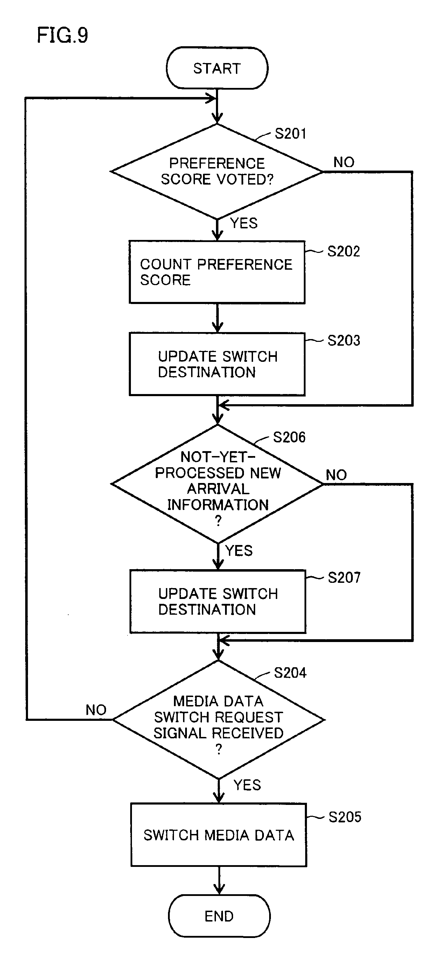

Fig. 9 is a flow chart representing a flow of the switch destination media data determining process performed by media data reproducing apparatus 100 in accordance with the first modification of the present embodiment. The process shown in the flow chart of Fig. 9 includes, in addition to the steps (S201 to S205) of the switch destination media data determining process performed by media data reproducing apparatus 100 of the first embodiment shown in Fig. 3, the process of steps S206 and S207.

Specifically, referring to Fig. 9, in the first modification of the present embodiment, preference score vote receiving unit 102 receives a user's vote of preference score (YES in S201), switch destination media data determining unit 104 determines the switch destination media data (S203), and thereafter, when new arrival information obtaining unit 108 has obtained new arrival information and not-yet-processed new arrival information exists (YES in S206), switch destination media data determining unit 104 determines the switch destination media data as the media data to be switched to next, based on the result of preference score counting and on the obtained new arrival information (S207).

When preference score vote receiving unit 102 has received a user's vote of preference score (YES in S201), but new arrival information obtaining unit 108 has not obtained any new arrival information and not-yet-processed new arrival information does not exist (NO in S206), the process of step S207 is skipped and the flow proceeds to step S204.

Other steps of Fig. 9 are the same as those shown in Fig. 3, and therefore, description thereof will not be repeated.

In the first modification of the first embodiment also, it is assumed that media data reproducing apparatus 100 is a TV set, which is controlled by using remote 300. Remote 300 is also the same as remote 300 shown in the first embodiment, and therefore, description thereof will not be repeated. In the following, zapping by the user through channels using these buttons 301 to 304 will be described.

In the first modification of the first embodiment also, through steps similar to those of the first embodiment, in switch destination media data determining unit 104, the arrangement indicating the order of channel switching is re-arranged as shown in Fig. 6, based on the preference score table shown in Fig. 5.

Referring to Fig. 6, a mark on the left of the channel arrangement represents a channel that is being displayed at present. Specifically, in the example of Fig. 6, channel 4 is displayed at present. In this state, when the user presses button 301, the channel is switched to channel 3, and when the user presses button 302, the channel is switched to channel 24, if new arrival information obtaining unit 108 has not obtained any new arrival information. In the process described above, this situation corresponds to NO in step S206 and YES in step S204, and hence the process of step S205 is executed.

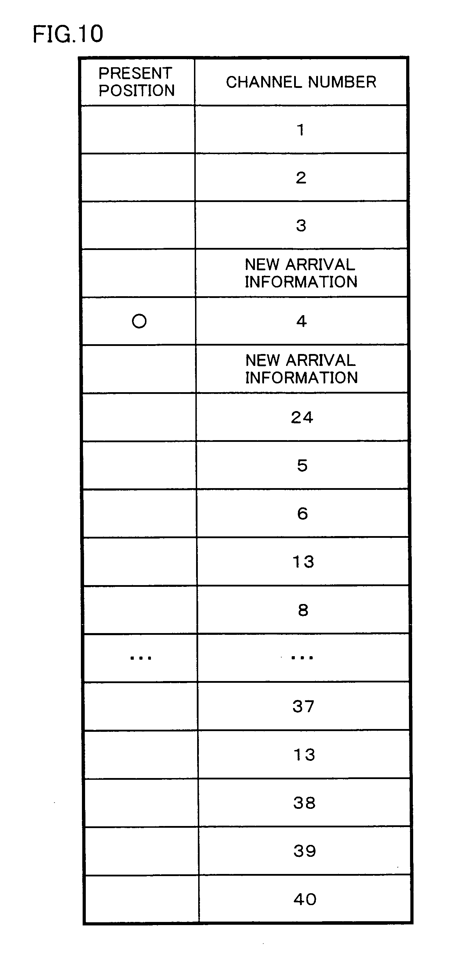

If new arrival information obtaining unit 108 has obtained new arrival information, the arrangement representing the order of channel switching is re-arranged as shown in Fig. 10. This situation corresponds to YES in step S206, and the process of step S203 is executed. In step S203, media data determining unit 104 updates the switch management table such that the obtained new arrival information is arranged at a position to be displayed with priority when the channel is switched. More specifically, referring to Fig. 10, in step S203, media data determining unit 104 arranges the obtained new arrival information on both sides of the channel displayed at present. As a result, no matter which of the buttons 301 and 302 is pressed by the user, the display is switched to the new arrival information.

Once switched to the new arrival information, when the next channel switch operation takes place, media data determining unit 104 may delete the new arrival information from the arrangement representing the order of channel switching.

Alternatively, the new arrival information may be treated as one channel similar to other channels and may be added to the preference score table shown in Fig. 5, so that when channel switch operations are repeated, the information appears at a certain frequency on the TV set as media data reproducing apparatus 100.

In that case, it is preferred that the preference score value can be set by pressing buttons 303 and 304 also on the newly added new arrival information.

In the example above, when new arrival information obtaining unit 108 obtains new arrival information, media data determining unit 104 arranges the new arrival information on both sides of the channel that is being displayed in an interrupting manner as shown in Fig. 10, so that the new arrival information immediately appears by the next channel switching operation. The position to insert the new arrival information, however, is not necessarily on both sides of the channel that is being displayed. It may be inserted at a position away from the channel that is being displayed, it may be inserted not on both sides but only on one side, or it may be inserted at a plurality of positions. Alternatively, based on the result of preference scoring at the time when the new arrival information is obtained, the preference score of the new arrival information may be arbitrarily set and the information may be entered to the channel switch order arrangement.

Examples of the new arrival information in the first modification of the first embodiment include information set to be received regularly from a WEB server or the like through the Internet (weather report, traffic information and the like), information set, for example, by an operation by the user, to be received when present time satisfies a prescribed condition (schedule information displayed when due time draws near, a TODO list and the like), information set to be received when present position satisfies a prescribed condition (when a mobile TV set, such as a TV set mounted on a car, or a TV set contained in a portable telephone or a head-mount display, comes close to a specific facility or equipment, information related to the facility or equipment is received), information distributed from a server through a communication network such as the Internet (news, stock quotation, auction bids, mails and the like), and status change notifying information of equipments existing close to or away from the user (information such as end of washing operation by a washing machine, heating and cooking operation for a prescribed time period by a microwave oven).

The new arrival information may be data itself to be displayed as a TV channel, or information representing a cue to obtain data that can be displayed, such as the location of the data to be displayed as a channel. In the former case, the new arrival information itself is displayed on the TV by the channel switching operation. In the latter case, the TV set as media data reproducing apparatus 100 separately obtains or prepares data to be displayed based on the obtained new arrival information, and registers the data in the channel switch order arrangement. The process of obtaining or preparing the data may be performed by new arrival information obtaining unit 108, or switch destination media data determining unit 104, or the process may be worked out by an external equipment through a communication circuit.

Further, based on the result of preference score counting, when a channel highly preferred by the user has some attributes such as attendant information including program category or performer information, the TV set as media data reproducing apparatus 100 may conduct a search using the attribute as a key, obtain information evaluated to be highly associated through communication means such as the Internet, and may handle the information as the new arrival information. In this case also, the new arrival information may be information that can be displayed as a channel, or information representing a cue to obtain or form information that can be displayed.

Further, at a breakpoint when a program broadcast ends, a new program starts, a commercial (CM) starts or a CM ends on a channel, the channel may be treated as the new arrival information.

In the first modification of the first embodiment, an example has been described in which the TV set as media data reproducing apparatus 100 receives information input from remote 300 and performs the switch destination media data determining process. Part of or all of the process may be executed by remote 300.

Specifically, remote 300 has a functional configuration such as shown in Fig. 7 and the new arrival information obtaining unit shown in Fig. 8 is not included (included on the TV side), and the channel switch destination determined by switch destination media data determining unit 204 is transmitted from output unit 205 having a communicating function to the TV set. The TV set, receiving the destination, may switch to the switch destination received from remote 300 if the new arrival information has not been obtained, and it may switch to the new arrival information when any has been obtained.

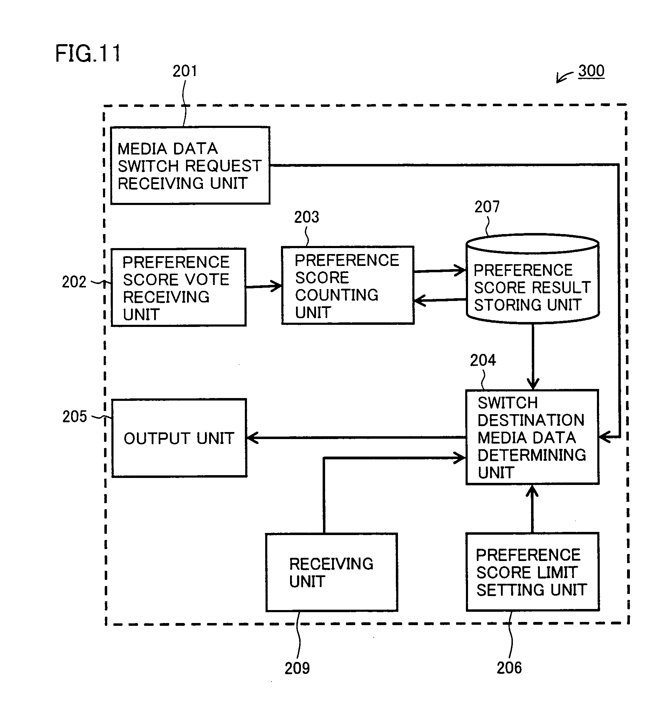

Alternatively, remote 300 may have the functional configuration such as shown in Fig. 11, which additionally includes a receiving unit 209 to receive a signal transmitted from the TV set, that is, the remote may be a bi-directional remote. When the TV set receives new arrival information, the remote may receive from the TV set the new arrival information, information representing a pointer to the new arrival information, or information representing whether the new arrival information has been received or not. Receiving the information, switch destination media data determining unit 204 of remote 300 may determine the new arrival information to be the destination, and may transmit the switch destination to the TV set from output unit 205.

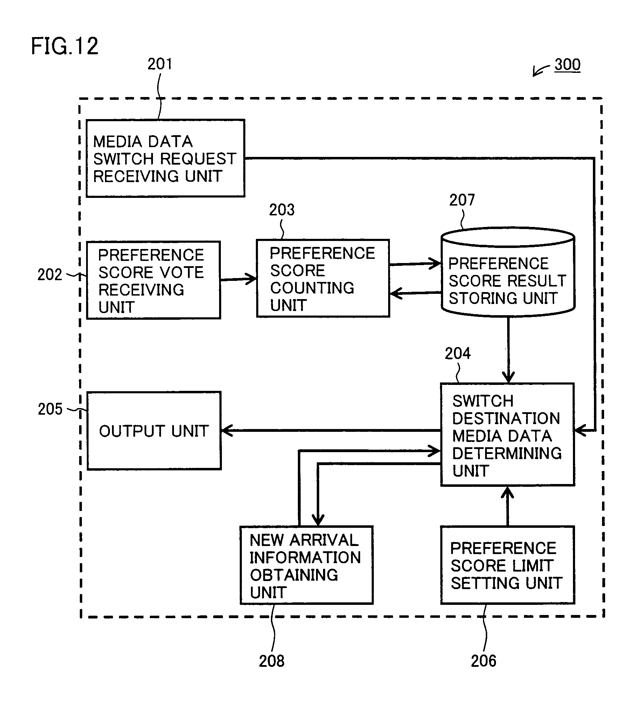

Alternatively, remote 300 may have the functional configuration such as shown in Fig. 12, which additionally includes a new arrival information obtaining unit 208. New arrival information obtaining unit 208 may be capable of obtaining new arrival information, information representing a pointer to new arrival information or information representing whether there is new arrival information or not, from external equipment or a server, through infrared communication, Bluetooth (R), telephone circuit or a LAN (Local Area Network). When new arrival information obtaining unit 208 obtains the information, switch destination media data determining unit 204 of remote 300 may determine the new arrival information to be the destination, and may transmit the switch destination to the TV set from output unit 205.

### [Second modification of the first embodiment]

As a second modification of the first embodiment, an example will be described in which the TV set as media data reproducing apparatus 100 includes a mode of successively switching channels and the mode is utilized.

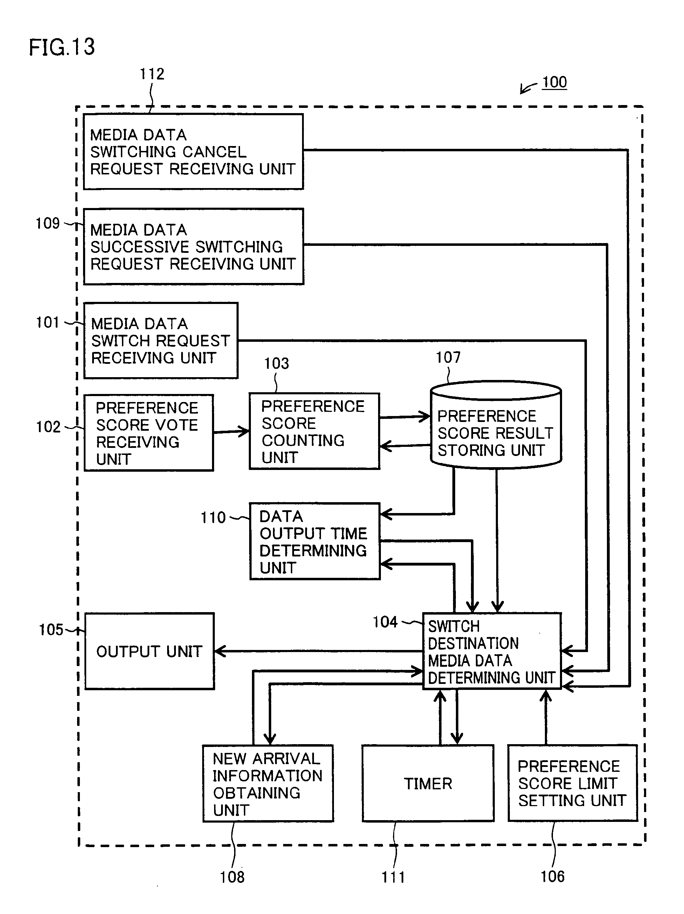

Fig. 13 is a functional block diagram representing a functional configuration realizing the function of successively switching media data to be displayed, in media data reproducing apparatus 100 in accordance with the second embodiment of the present invention.

Referring to Fig. 13, media data reproducing apparatus 100 in accordance with the second modification includes, in addition to various components of media data reproducing apparatus 100 in accordance with the first modification shown in Fig. 8, a media data successive switching request receiving unit 109, a data output time determining unit 110, a timer 111, and a media data successive switching cancel request receiving unit 112 for canceling the media data successive switching mode.

In the second modification, a user may perform a media data successive switching request operation, on media data reproducing apparatus 100. The media data successive switching request operation is received by media data successive switching request receiving unit 109.

Data output time determining unit 110 determines, for each data, the output time, or how long the data is to be output, when the output data is switched to the data of interest, utilizing the preference score result stored in preference score result storing unit 107 and the set upper or lower limit of preference score.

Switch destination media data determining unit 104 obtains the output time set by data output time determining unit 110 for the determined switch destination media data, outputs the determined switch destination media data to output unit 105, and notifies the said output time to timer 111.

Receiving the notification of media data output time from switch destination media data determining unit 104, timer 111 returns, after said output time has passed from the time of notification, information indicating the lapse of prescribed time period to switch destination media data determining unit 104.

Receiving the information indicating the lapse of prescribed time period from timer 111, switch destination media data determining unit 104 performs the next switching process.

By the repetition of the above described process, the media data to be output are switched successively.

Further, the user may perform an operation to request cancellation of the successive switching, to media data successive switching cancel request receiving unit 112. By this operation, successive switching of data is stopped.

Media data successive switching cancel request receiving unit 112 may not be provided, and the operation to request cancellation of the successive switching may be performed simultaneously when the media data switch request operation is made on media data switch request receiving unit 101.

Other components of media data reproducing apparatus 100 have the same functions and roles as those of the first embodiment and of the first modification of the first embodiment, and therefore, description thereof will not be repeated.

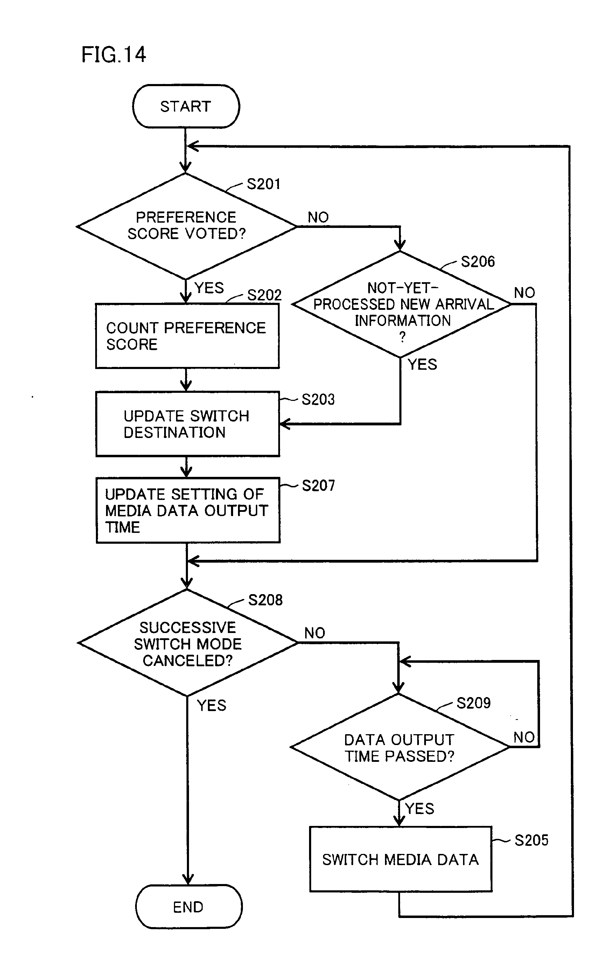

Fig. 14 is a flow chart representing a flow of the media data switching process performed by media data reproducing apparatus 100 in accordance with the second embodiment of the present invention. The process shown in the flow chart of Fig. 14 includes, in addition to the steps (S201 to S203, S205, S206) of the switch destination media data reproducing apparatus 100 of the first modification of the first embodiment shown in Fig. 9, the process of steps S207 to S209.

Referring to Fig. 14, after step S203 of the first modification in which switch destination media data determining unit 104 determines the switch destination media data, that is, the media data to be switched to next, based on the result of preference score counting and the obtained new arrival information (S203), in the second modification, data output time determining unit 110 updates the output time (S207).

Further, if the successive switch setting mode is not cancelled (NO in S208), the process to switch to the switch destination data set in step S203 is performed (S205) at a time point when the output time set by data output time determining unit 110 has passed (YES in S209).

If the successive switch setting mode is cancelled (YES in S208), media data switching in step S205 is not executed, and the process ends.

Other steps of Fig. 14 are the same as those shown in Fig. 3 and/or Fig. 9, and therefore, description thereof will not be repeated.

In the second modification of the first embodiment also, media data reproducing apparatus 100 is a TV set, which is controlled by remote 300. Remote 300 is the same as remote 300 of the first embodiment, and therefore, description thereof will not be repeated.

Further, buttons-layout of remote 300 is the same as that shown in Fig. 4, and therefore, description will be given with reference to Fig. 4. Specifically, referring to Fig. 4, when button 302 of remote 300 in accordance with the second modification of the first embodiment for switching to the next channel is kept pressed for more than 1 second, a channel successive switching mode in forward direction is set, and when button 301 for switching to the previous channel is kept pressed for more than 1 second, a channel successive switching mode in backward direction is set. When the channel successive switching mode is set and button 301 or 302 is pressed shorter than 1 second, the successive switching mode is cancelled. Functions of buttons in the successive switching mode cancelled state are the same as in the first embodiment.

The layout and functions of the buttons on remote 300 are not limited to those described in the foregoing. By way of example, for setting and canceling the successive switching mode, a dedicated button, lever or a dial may be provided. Alternatively, the successive switching mode may be automatically cancelled when switched to the new arrival information, as described in the first modification of the first embodiment.

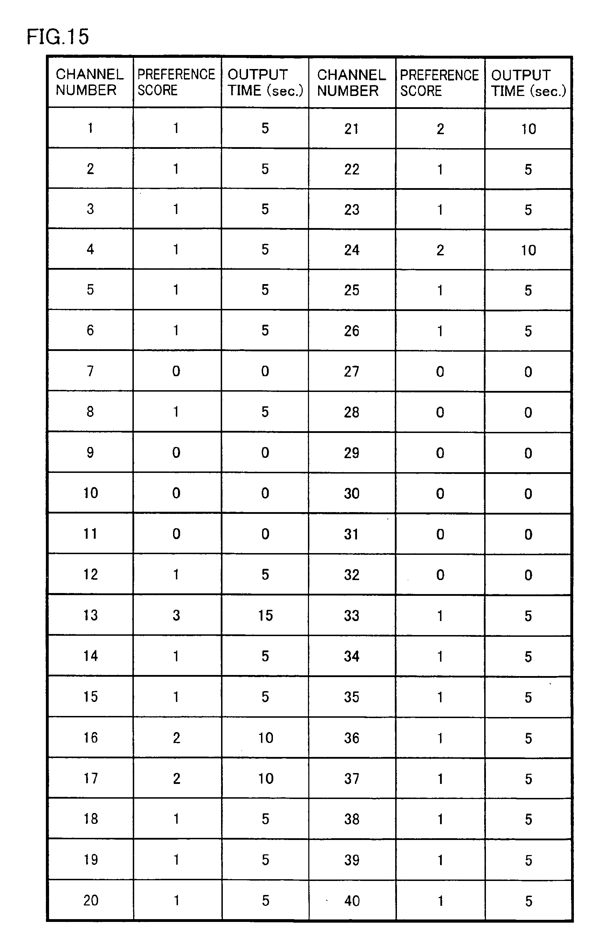

Data output time determining unit 110 sets output time of each data based on the preference score table shown in Fig. 5, and prepares an output time management table. Fig. 15 shows a specific example of the output time management table prepared by data output time determining unit 110 in accordance with the second modification of the first embodiment. The output time management table shown in Fig. 15 is prepared by data output time determining unit 110 every time the user's vote from remote 300 is received at preference vote receiving unit 102 and the preference score table stored in preference score result storing unit 107 is updated. Alternatively, the table may be prepared when a channel switch request operation by buttons 301 and 302 from remote 300 is received at media data switch request receiving unit 101. Alternatively, the table may be prepared at a prescribed time interval, independent of the timing of updating the preference score table or the channel switch request operation.

Referring to Fig. 15, in the output time management table, in addition to the preference scores for respective channels described on the preference score table, output times are described in correspondence to respective channel numbers. When the output time management table shown in Fig. 15 is prepared, data output time determining unit 110 sets an output time of a channel to be (preference score x 5) sec., when the preference score of that channel number is not smaller than 0 in the preference score table shown in Fig. 5.

In Fig. 5, the channel preference score is 1 in the initial state, and in Fig. 5, the output time of a channel having the preference score 1 is determined to be 5 seconds. It is preferable, however, that these values can appropriately be adjusted by the user.

The output time of each channel may be determined such that a total time necessary to switch and display all the channels once is defined beforehand, and the total time is divided in accordance with the preference scores of respective channels.

In the TV set as media data reproducing apparatus 100, the arrangement representing the channel switch order is re-arranged as shown in Fig. 6 at switch destination media data determining unit 104, and the channel switching process is performed successively in the order as defined by the switch management table. At that time, the output time set for each channel in the output time management table shown in Fig. 15 is referred to, and the channel switching process takes place every time the output time has passed.

The channel switching process may be performed not using the switch management table shown in Fig. 6, and the switching may be done in the order of channel numbers.

The TV set as media data reproducing apparatus 100 in accordance with the second modification of the first embodiment performs the operation as described above. Therefore, when the user appropriately sets the preference scores of various channels by the preference score voting operation and sets the successive switching mode, channels are automatically switched with channels of higher preference score being displayed longer and channels of lower preference score being displayed shorter. As a result, the user comes to view channels of higher preference with more focus.

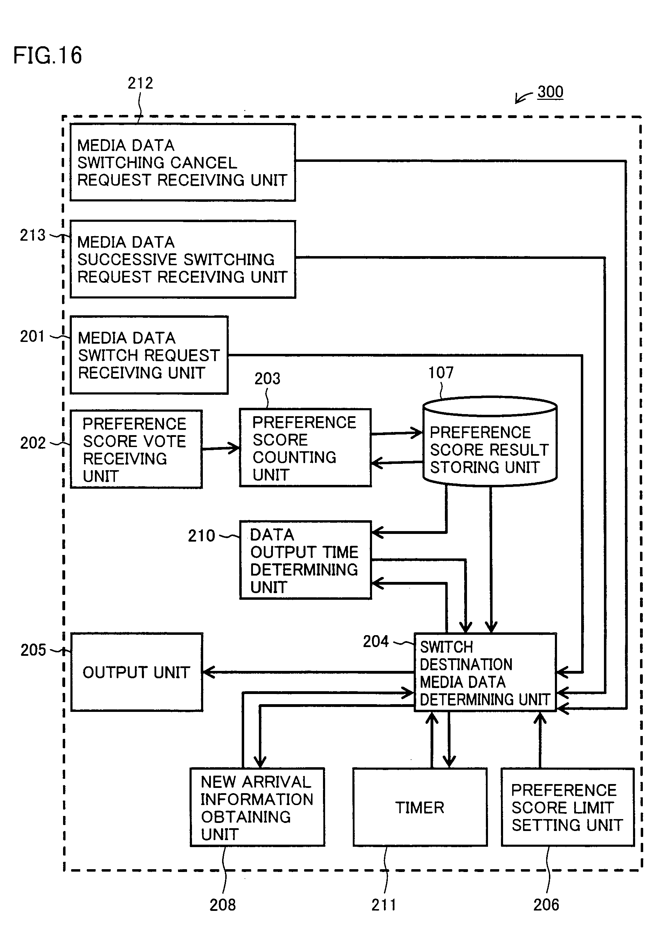

In the second modification of the first embodiment, an example has been described in which the TV set as media data reproducing apparatus 100 receiving an information input from remote 300 determines the media data as the destination of switching. The process may be fully performed by remote 300. In that case, remote 300 has such a functional configuration as shown in Fig. 16, which is similar to the functional configuration of the TV set as media data reproducing apparatus 100 shown in Fig. 13. The channel switch destination determined by channel switch destination media data determining unit 204 is transmitted to the TV set from output unit 205 having the communication function. The process here is the same as that described above, and therefore, description thereof will not be repeated here.

Remote 300 may not include new arrival information obtaining unit 208. This is the same as described with reference to the first modification of the first embodiment, and therefore, description thereof will not be repeated here.

### [Second Embodiment]

As a second embodiment, an example will be described in which media data reproducing apparatus 100 is a digital camera.

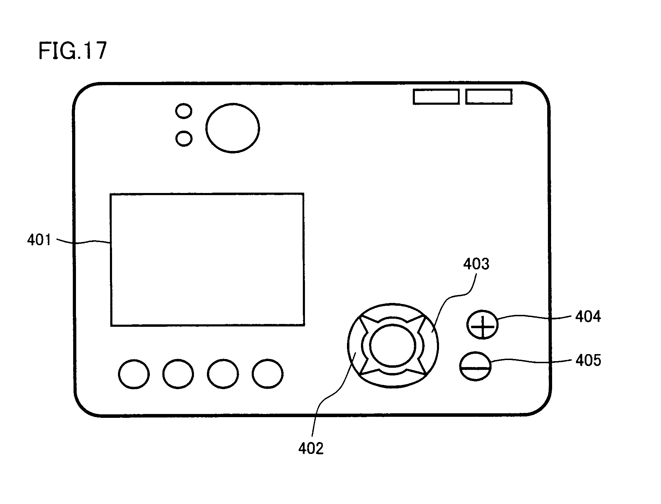

Fig. 17 shows a specific example of an operation system layout on a back surface of a digital camera 400 as media data reproducing apparatus 100.

Referring to Fig. 17, digital camera 400 in accordance with the second embodiment includes, on a liquid crystal display screen 401 as output unit 105, a button 402 for displaying a previous image, a button 403 for displaying a next image, a button 404 for a positive vote to increase the preference score, and a button 405 for a negative vote to decrease the preference score

Digital camera 400 as media data reproducing apparatus 100 receives at media data switch request receiving unit 101, a display image switch request operation by buttons 402 and 403. Further, it receives at preference score vote receiving unit 102, the preference score voting operation by buttons 404 and 405.

In the following, an operation by the user of successively displaying images recorded in a memory on liquid crystal display screen 401 by using buttons 402 to 405 will be described.

It is assumed that 40 images in all are recorded in the form of files in the memory, which files have file names 1.jpg to 40.jpg.

In a stage where preference score voting is not at all performed, every time button 402 is pressed, the files are displayed in reverse order, and every time button 403 is pressed, the files are displayed in forward order, on liquid crystal display screen 401. When button 403 is pressed while image file 40.jpg, that is, the last image file is being displayed, the first image file 1.jpg is displayed, and when button 402 is pressed while image file 1.jpg is being displayed, image file 40.jpg is displayed.

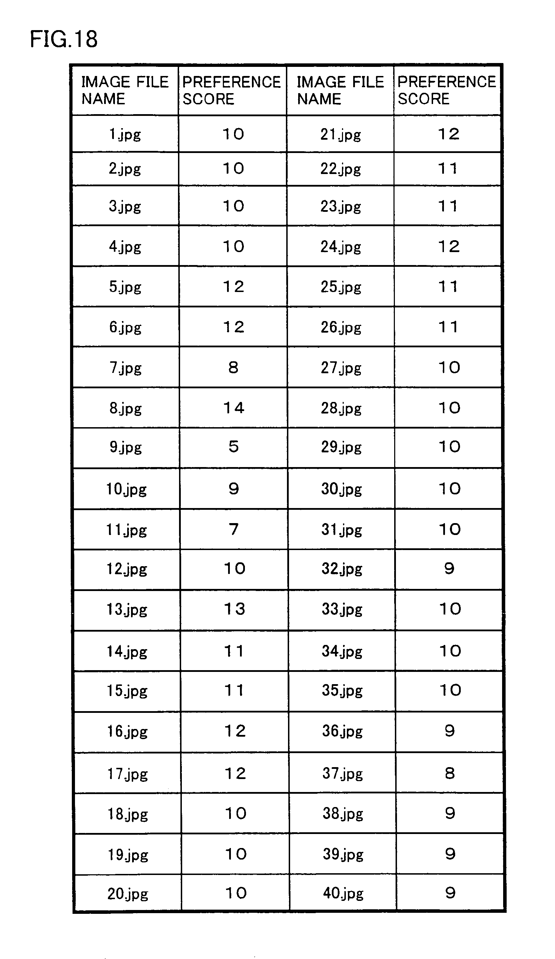

Digital camera 400 as media data reproducing apparatus 100 prepares, at preference score counting unit 103, a preference score table such as shown in Fig. 18, based on user's vote received by preference vote receiving unit 102. Then, the preference score table stored in preference score result storing unit 107 is updated, and user preference to each image file is managed.

Fig. 18 shows a specific example of the preference score table prepared by preference score counting unit 103 and stored in preference score result storing unit 107. The preference score table shown in Fig. 18 shows image files and corresponding user preference scores of respective image files.

It is assumed that in the preference score table shown in Fig. 18, all image files have the preference score set to 10 in the initial state. An image file for which button 404 is pressed while being displayed, the preference score is incremented by the number of pressing. On the contrary, an image file for which button 405 is pressed while being displayed, the preference score is decremented by the number of pressing.

In the foregoing, though an example has been described in which the preference score voting is done by pressing button 404 or 405 only for the image file that is being displayed, vote for other image files not displayed at present may be made simultaneously. By way of example, when the image file includes attribute such as attendant information including image category or location information, simultaneous voting may be possible for other image files including the same attribute as that of the image file that is presently displayed. As for the method of setting such attribute, existing setting method may be used, and therefore, detailed description will not be given here.

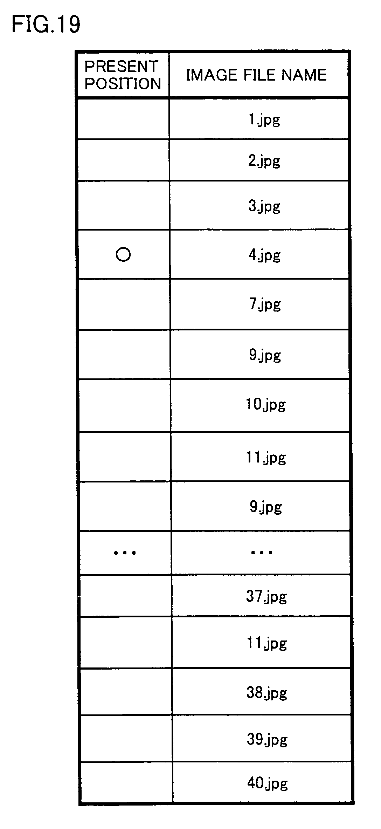

In digital camera 400 as media data reproducing apparatus 100, based on the preference score table shown in Fig. 18, an arrangement representing the order of displaying image files is re-arranged as shown in Fig. 19, at switch destination media data determining unit 104. Fig. 19 shows a specific example of the switch management table prepared by switch destination media data determining unit 104.

When the switch management table shown in Fig. 19 is prepared, switch destination media data determining unit 104 in accordance with the present embodiment operates in a manner reverse to the switch media data determining unit 104 in accordance with the first embodiment. Specifically, referring to Fig. 19, on the preference score table shown in Fig. 18, image files of which preference scores of 10 or lower are entered. Particularly, files having preference score of 9 or lower are entered larger number of times as the score becomes lower.

Further referring to Fig. 19, a mark on the left of the image file display order represents an image file that is being displayed at present. Specifically, in the example of Fig. 19, image file 4.jpg is displayed at present. In this state, when the user presses button 402, the image file is switched to 3.jpg, and when the user presses button 403, the image file is switched to 7.jpg.

Digital camera 400 as media data reproducing apparatus 100 in accordance with the second embodiment performs the above described operation. Therefore, when the user repeats the operations of preference voting and switching display images, images having higher preference come to be displayed less frequently and images having low preference come to be displayed more frequently. Thus, the user can narrow down to one or more images of low preference eventually, without intentionally remembering the file names. This is useful to narrow down candidates to be erased, when remaining memory capacity becomes small and it becomes necessary to select and erase unnecessary images for further image pick-up.

The preference score information set by the above described series of operations is reset under a prescribed condition. As for the prescribed condition, the preference scores of all images may be set to 10 when the power of the digital camera is turned off, or a dedicated separate operating means may be provided and used for resetting the preference score.

In the example above, the image files having preference scores of 11 or higher are automatically excluded from the object of switching. When the user performs an operation of setting the upper limit of preference score and the upper limit of preference score is set, for example, to 7, then the arrangement of Fig. 19 may be re-arranged from a list of image files having preference scores of 7 or lower.

Further, in the second embodiment, a process for narrowing down image files having low preference scores has been described. Naturally, a process for narrowing down images of higher preference scores may be performed as in the first embodiment. Such a process may be suitable when favorable images are successively selected and displayed as a slide-show.

In media data reproducing apparatus 100, it is possible to determine the media data to be switched to upon a switch request from the user based on the reproduction time of media data, in place of the result of voting by the user. Specifically, in that case, preference score vote receiving unit 102 of media data reproducing apparatus 100 has a function of measuring reproduction time in place of the function of receiving vote described above, and measures reproduction time of each media data by the user. Preference score counting unit 103 counts the preference score based on the reproduction time, assuming that a media data of which measured reproduction time is long has higher preference score, and through similar operations, the media data to be switched to can be determined.

### [Modification of the second embodiment]

As a modification of the second embodiment, an example will be described in which the digital camera as media data reproducing apparatus 100 has a mode of successively switching and displaying images automatically and the mode is utilized.

In media data reproducing apparatus 100 in accordance with the modification of the second embodiment, the function of successively switching media data to be reproduced is realized by the same functional configuration as that shown in the functional block diagram of Fig. 13, and the flow of the media data switching process is similar to that of media data switching process shown in the flow chart of Fig. 14. Therefore, description thereof will not be repeated.

Further, the operation system layout on the back surface of digital camera 400 as media data reproducing apparatus 100 in accordance with the modification of the second embodiment is also the same as the operation system layout shown in Fig. 17. Therefore, description will be given with reference to Fig. 17. Referring to Fig. 17, when button 403 for displaying the next image is kept pressed for more than 1 second, an image successive switching mode in forward direction is set, and when button 402 for displaying the previous image is kept pressed for more than 1 second, an image successive switching mode in backward direction is set. When the image successive switching mode is set and button 402 or 403 is pressed shorter than 1 second, the successive switching mode is cancelled. Functions of buttons in the successive switching mode cancelled state are the same as in the second embodiment.

The layout and functions of the buttons on digital camera 400 are not limited to those described in the foregoing. By way of example, for setting and canceling the successive switching mode, a dedicated button, lever or a dial may be provided.

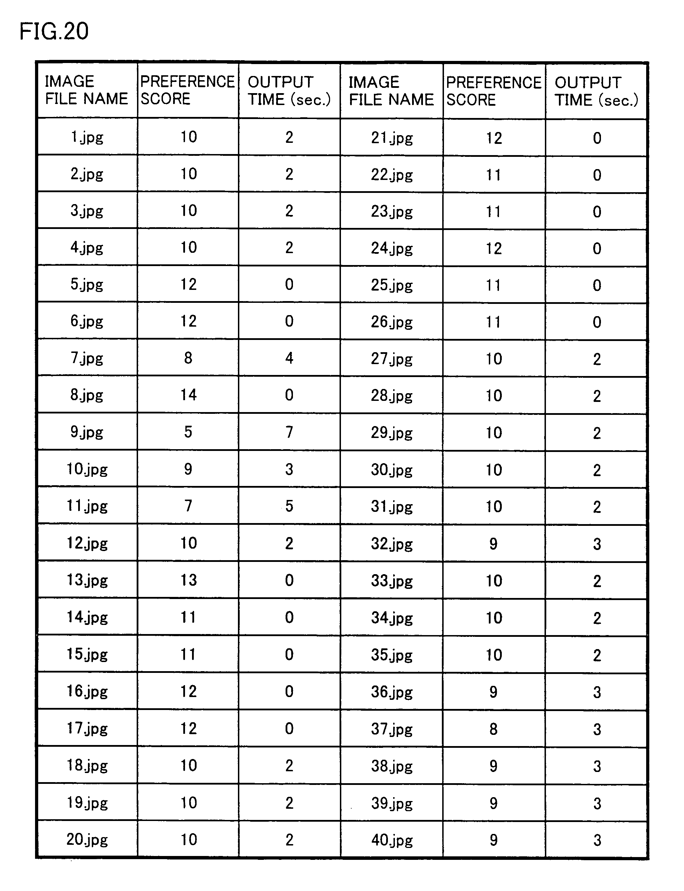

Data output time determining unit 110 sets output time of each data based on the preference score table shown in Fig. 18, and prepares an output time management table. Fig. 20 shows a specific example of the output time management table prepared by data output time determining unit 110 in accordance with the modification of the second embodiment. The output time management table shown in Fig. 20 is prepared by data output time determining unit 110 every time the user's vote by pressing button 404 or 405 is received at preference vote receiving unit 102 and the preference score table stored in preference score result storing unit 107 is updated. Alternatively, the table may be prepared when an image switch request operation by buttons 402 and 403 from digital camera 400 is received at media data switch request receiving unit 101. Alternatively, the table may be prepared at a prescribed time interval, independent of the timing of updating the preference score table or the image switch request operation.

Referring to Fig. 20, in the output time management table, in addition to the preference scores for respective image files described on the preference score table, output times are described in correspondence to respective image files. When the output time management table shown in Fig. 20 is prepared, data output time determining unit 110 sets an output time of an image to be (12 - preference score) sec., when the preference score of image file is not higher than 10 in the preference score table shown in Fig. 18.

The method of determining the output time is not limited to the one described above. By way of example, a total time necessary to display all the images once may be defined beforehand, and the total time may be divided in accordance with the preference scores of respective image files.

Further, the output time may be determined taking into account attributes of respective image files such as the time and date of image pick-up and file size, in addition to the preference information from the user.

Further, it is preferable that the method of determining the output time can appropriately be adjusted by the user.

In digital camera 400 as media data reproducing apparatus 100, the arrangement representing the image file switching order is re-arranged as shown in Fig. 19 at switch destination media data determining unit 104, and the image files are successively switched in accordance with the order of the switch management table. At that time, the output time set for each image file in the output time management table shown in Fig. 20 is referred to, and the image file switching process takes place every time the output time has passed.

The image file switching process may be executed not in accordance with the switch management table shown in Fig. 19, and the image files may be switched in ascending order or descending order of image file names, in order of pick-up date and time, or in order of file size.

Digital camera 400 as media data reproducing apparatus 100 in accordance with the modification of the second embodiment performs the operation as described above. Therefore, when the user appropriately sets the preference scores of various image files by the preference score voting operation and sets the successive switching mode, images are automatically switched with images of lower preference score being displayed longer and images of higher preference score being displayed shorter. As a result, the user comes to view images of lower preference with more focus. This is useful to narrow down candidates to be erased, when remaining memory capacity becomes small and it becomes necessary to select and erase unnecessary images for further image pick-up.

Further, in the modification of the second embodiment, a process for narrowing down image files having low preference scores has been described. Naturally, a process for narrowing down images of higher preference scores may be performed as in the first embodiment. Such a process may be suitable when favorable images are successively selected and displayed as a slide-show.

In the first and second embodiments and modifications thereof described above, examples have been described in which media data reproducing apparatus is implemented as a TV set and a digital camera. The present invention, however, is similarly applicable to other apparatuses. Examples of other apparatuses may include a music reproducing apparatus, an apparatus reading and reproducing still images or moving pictures from a recording medium such as an HDD (Hard Disk Drive) or a DVD (Digital Video Disc) and the like.

The method of determining switch destination media data in media data reproducing apparatus 100 in accordance with the first and second embodiments and modifications thereof is realized by a program providing a function of media data reproduction control function. The program is stored in a computer readable recording medium. In the present invention, the process is performed by a general computer, and therefore, the program medium may be a memory such as an ROM contained in or connected to the general computer. Alternatively, the program medium may be such that a program reading apparatus is provided as an external apparatus, and a recording medium is inserted to the external apparatus.

In any case, the stored program may be accessed by a microprocessor and executed, or in any case, the program may be read, the read program may be downloaded to a program storage area such as an RAM provided in a general computer, and the program may be executed. It is assumed that the downloading program is stored in advance in the main apparatus.

The program medium mentioned above is a recording medium formed to be separable from the main body, and it may be any medium that fixedly carries the program, including a tape such as magnetic tape or cassette tape, a disk such as a magnetic disc including a flexible disk and hard disk, or an optical disk including a CD-ROM (Compact Disc-ROM), MO (MagnetOptical disc), MD (Mini Disc) and a DVD, a card such as an IC card (including a memory card) and an optical card, or a semiconductor memory including a mask ROM, EEPROM (Erasable Programmable Read Only Memory: ultra-violet erasing type ROM)(R), EEPROM (Electrically Erasable Programmable Read Only Memory: electrically erasing type ROM)(R), a flash ROM and the like.

When a system connectable to a communication network including the Internet is formed, a medium that carries the program in a non-fixed manner may be used, with the program downloaded from the communication network. When the program is downloaded from the communication network, the downloading program may be stored in advance in the main apparatus, or it may be installed from a separate recording medium.

The contents stored in the recording medium are not limited to the program and may include data.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data output apparatus, comprising:
a preference score vote receiving unit (102) receiving a vote of preference score of output data representing a degree of preference;
a preference score counting unit (103) counting the vote of preference score received by said preference score vote receiving unit (102);
an output unit (105) switching data to be output from first data to second data and outputting; and
a switch destination data determining unit (104) determining, when the data output by said output unit (105) is to be switched from the first data to the second data, said second data based on a result of counting by said preference score counting unit (103).

2. The data output apparatus according to claim 1, wherein
said preference score vote receiving unit (102) is capable of receiving a plurality of votes in accordance with degree of preference for one said output data.

3. The data output apparatus according to claim 1, wherein
said preference score vote receiving unit (102) receives a vote of degree of preference including a negative vote representing low preference.

4. The data output apparatus according to claim 1, wherein
said preference score vote receiving unit (102) receives a vote of degree of preference for the first data being output at present by said output unit (105).

5. The data output apparatus according to claim 1, wherein
said preference score vote receiving unit (102) simultaneously receives a vote of degree of preference for data other than said first data, including same attribute as said first data.

6. The data output apparatus according to claim 1, further comprising
a counting result reset unit (103) resetting the result of counting by said preference score counting unit (103).

7. The data output apparatus according to claim 1, wherein
said switch destination data determining unit (104) determines probability of data to be the second data switched to and output by said output unit (105) such that data of high preference score has high probability, based on the result of counting of the preference score by said preference score counting unit (103).

8. The data output apparatus according to claim 7, wherein
said switch destination data determining unit (104) forms a switch order such that said data of which probability to be the second data is determined to be high appears more frequently, based on the result of counting of the preference score by said preference score counting unit (103).

9. The data output apparatus according to claim 1, wherein
said switch destination data determining unit (104) determines probability of data to be the second data switched to and output by said output unit (105) such that data of low preference score has high probability, based on the result of counting of the preference score by said preference score counting unit (103).

10. The data output apparatus according to claim 9, wherein
said switch destination data determining unit (104) forms a switch order such that said data of which probability to be the second data is determined to be high appears more frequently, based on the result of counting of the preference score by said preference score counting unit (103).

11. The data output apparatus according to claim 1, further comprising
a preference score limit setting unit (106) setting a lower limit of preference score; wherein
said switch destination data determining unit (104) determines data having higher preference score than the lower limit set by said preference score limit setting unit (106) to be the second data switched and output by said output unit (105), based on the result of counting by said preference score counting unit (103).

12. The data output apparatus according to claim 1, further comprising
a preference score limit setting unit (106) setting a higher limit of preference score; wherein
said switch destination data determining unit (104) determines data having lower preference score than the higher limit set by said preference score limit setting unit (106) to be the second data switched and output by said output unit (105), based on the result of counting by said preference score counting unit (103).

13. The data output apparatus according to claim 1, comprising
in place of said preference score vote receiving unit (102), an output time measuring unit (102) measuring time of data output; wherein
said preference score counting unit (103) counts data preference score based on the output time measured by said output time measuring unit (102).

14. The data output apparatus according to claim 1, further comprising
a new arrival information obtaining unit (108) obtaining new arrival information; wherein
said switch destination data determining unit (104) determines, when said new arrival information is obtained by said new arrival information obtaining unit (108), said new arrival information to be said second data.

15. The data output apparatus according to claim 1, wherein
said output unit (105) successively performs a process of switching and outputting said first and second data.

16. The data output apparatus according to claim 15, further comprising
a data output time determining unit (110) determining time of data output by said output unit (105); wherein
said output unit (105) performs said process of switching and outputting said first and second data every time the time determined by said output time determining unit (110) has passed.

17. The data output apparatus according to claim 16, wherein
said data output time determining unit (110) determines said time of data output by said output unit (105) based on the result of counting preference score by said preference score counting unit (103).

18. The data output apparatus according to claim 17, wherein
said data output time determining unit (110) determines output time of data having higher preference score to be longer, based on the result of counting preference score by said preference score counting unit (103).

19. The data output apparatus according to claim 17, wherein
said data output time determining unit (110) determines output time of data having lower preference score to be longer, based on the result of counting preference score by said preference score counting unit (103).

20. A control apparatus communicating with a data output apparatus for controlling said data output apparatus, comprising:
a preference score vote receiving unit (202) receiving a vote of preference score of output data representing a degree of preference;
preference score counting means for counting the vote of preference score received by said preference score vote receiving unit (202);
an output unit (205) outputting to said data output apparatus a control signal for switching data to be output by said output apparatus from first data to second data; and
a switch destination data determining unit (204) for determining said second data, when said control signal for switching data to be output by said output apparatus from said first data to second data is output from said output unit (205) to said output apparatus, based on a result of counting by said preference score counting unit (203).

21. A data output method, comprising:
the preference score voting step (S201) of receiving a vote of preference score of output data representing degree of preference;
the preference score counting step (S202) of counting said vote of preference score;
the data switching step (S205) of switching the output data from first data to second data; and
the switch destination data determining step (S203) of determining said second data, when said first data being output is switched to the second data in said data switching step (S205), based on the result of counting of said preference score.

22. A data output program product causing a computer to execute a data output method, the method comprising
the preference score voting step (S201) of receiving a vote of preference score of output data representing degree of preference;
the preference score counting step (S202) of counting said vote of preference score;
the data switching step (S205) of switching the output data from first data to second data; and
the switch destination data determining step (S203) of determining said second data, when said first data being output is switched to the second data in said data switching step (S205), based on the result of counting of said preference score.
